# EUROPÄISCHE PATENTSCHRIFT

(11) **EP 1 618 987 B1**
(45) Veröffentlichungstag und Bekanntmachung des Hinweises auf die Patenterteilung: **25.04.2007**
(21) Anmeldenummer: 04017444.3
(22) Anmeldetag: 23.07.2004
(51) Int. Cl.: B23Q 1/01, B23Q 1/62, B23Q 11/08

(54) **Horizontale Werkzeugmaschine mit stationärer Arbeitsspindel im U-förmigen Rahmen**
Horizontal machine tool with fixed working spindle in U-shaped frame
Machine-outil horizontale avec broche fixe dans un cadre en forme de U

(43) Veröffentlichungstag der Anmeldung: 25.01.2006
(73) Patentinhaber: Schwäbische Werkzeugmaschinen GmbH, 78713 Schramberg-Waldmössingen (DE)
(72) Erfinder: Weber, Stefan, 78655 Dunningen-Seedorf (DE); Armleder, Wolfgang, 78628 Rottweil (DE)
(74) Vertreter: Kohler Schmid Möbus

(56) Entgegenhaltungen:
- EP-A- 1 201 351
- WO-A-02/00390
- DE-A- 10 235 518
- US-B1- 6 623 222

## Beschreibung

Die vorliegende Erfindung betrifft eine horizontale Werkzeugmaschine mit einem zu einer Rahmenseite hin offenen C- oder U-förmigen Rahmen, an dessen Rahmenwand mindestens eine zur offenen Rahmenseite hin gerichtete Arbeitsspindel stationär befestigt ist, mit jeweils einer horizontalen Führung an den beiden Rahmenschenkeln für einen X-Schlitten einer in X-, Y- und Z-Richtung verfahrbaren Schlitteneinheit und mit einer Werkstückhalteeinrichtung am Z-Schlitten der Schlitteneinheit.

Eine derartige Werkzeugmaschine ist durch die WO-02/00390-A bekannt geworden.

Bei der aus WO-02/00390-A bekannten Werkzeugmaschine ist die Rahmenwand horizontal mit nach oben offener Rahmenseite angeordnet. Die horizontalen Führungen stehen in X-Richtung beidseitig um weniger als ein Drittel der Länge des X-Schlittens über, so dass der X-Schlitten in seinen beiden X-Endstellungen die in X-Richtung jeweils äußeren Arbeitsspindeln verdeckt.

Aus der EP-1 201 351-A ist weiter eine Werkzeugmaschine mit einem flachen Bett, mit einer entlang den X- und Y-Achsen beweglichen Arbeitsspindel und einer Werkstückhalterung bekannt, die drehbar an einem Schwenkbalken gelagert ist, welcher an einem in Z-Richtung verfahrbaren Schlitten schwenkbar um eine in X-Richtung verlaufende horizontale Achse gelagert ist.

Aus der DE-A-102 35 518 ist eine Werkzeugmaschine in Form eines Bearbeitungszentrums bekannt. Für einen Werkzeugwechsel müssen die horizontalen Arbeitsspindeln aus ihrer Bearbeitungsposition in eine Wechselposition verfahren werden.

Aus der DE-A-101 44 678 ist eine Werkzeugmaschine in Form eines Fräs- und Bohrbearbeitungszentrums bekannt. Diese Werkzeugmaschine hat einen Maschinenständer, ein Spindelgehäuse mit einer horizontalen Arbeitsspindel und eine in mehreren Achsen bewegbare Werkstückhalteeinrichtung (Werkstückträger) für die Aufnahme der zu bearbeitenden Werkstücke. Die Arbeitsspindel ist entlang ihrer Achse (Z-Richtung) und die Werkstückhalteeinrichtung über einen Kreuzschlitten in X- und Y-Richtung verschiebbar. Die Werkstückhalteeinrichtung ist am Kreuzschlitten hängend gehalten, so dass die in Z-Richtung wirkenden Bearbeitungskräfte am Werkstück und Werkstückhalteeinrichtung zu Querkräften führen, die vom Kreuzschlitten an den Maschinenständer abgeleitet werden müssen. Eine Querbelastung der Z-Achse kann bei der Zerspanung zu sehr hohen Nachgiebigkeiten, d.h. zu Verlagerungen zwischen Werkstückseite und Werkzeugseite, führen und so nur in eingeschränktem Maße für eine Mehrspindel-Bearbeitung eingesetzt werden, bei der mehrere Arbeitsspindeln zu "Bohrbildern", d.h. zu Mehrspindelbohrköpfen, zusammengefasst sind.

Es ist die Aufgabe der vorliegenden Erfindung, bei einer horizontalen Werkzeugmaschine der eingangs genannten Art eine günstige Zu- und Abführung von Werkstücken zu ermöglichen.

Diese Aufgabe wird erfindungsgemäß dadurch gelöst, dass sich die horizontalen Führungen in X-Richtung mindestens um die Breite der Schlitteneinheit über die X-Position der einen bzw. jeder Arbeitsspindel hinaus erstrecken und dass die Rahmenwand vertikal mit seitlich offener Rahmenseite angeordnet ist und in dem Bereich, in welchem sich die horizontalen Führungen über die X-Position der bzw. jeder Arbeitsspindel hinaus erstrecken, mindestens ein Fenster zur Zu- und Abführung von Werkstücken aufweist.

Die in den Arbeitsspindeln befindlichen Werkzeuge sind einem Verschleiß unterworfen und müssen manuell, manuell mit Hilfsmitteln oder automatisch über eine Greifereinrichtung getauscht werden können.

Erfindungsgemäß wird bei einem Werkzeugwechsel die Schlitteneinheit in der X-Achse zur Seite verfahren, bis die Arbeitsspindel von der offenen Rahmenseite her zugänglich ist und das Werkzeug gewechselt werden kann. Da der Zugang zum Werkzeug von der offenen Rahmenseite erfolgt, können der Abstand zwischen Arbeitsspindel und X- und Y-Schlitten und damit auch die Auskragung des Z-Schlittens während der Bearbeitung klein gehalten werden. Die Werkstückhalteeinrichtung liegt in Z-Richtung der Arbeitsspindel gegenüber, ist also den Bearbeitungskräften genau entgegengesetzt, was zur höchsten Steifigkeit der Werkzeugmaschine führt. Das erfindungsgemäße Fenster definiert eine oder mehrere Pick-Up-Stellungen der Schlitteneinheit, in der bzw. in denen die Werkstückhalteeinrichtung ein zu bearbeitendes Werkstück z.B. von einem Transportband oder einer Zuführeinheit greift und ein bearbeitetes Werkstück darauf zurückstellt.

Die Arbeitsspindeln sind im Wesentlichen werkstückspezifisch in den Rahmen eingebaut. Meistens werden die Spindelachsen horizontal angeordnet, jedoch sind auch raumschräge Anordnungen möglich. Die Arbeitsspindeln können in einem begrenzten Umfang auch oben oder seitlich angeordnet sein, dies ergibt sich aus einer "raumschrägen" Bearbeitungsrichtung.

Bei besonders bevorzugten Ausführungsformen der Erfindung ist die der bzw. jeder Arbeitsspindel gegenüberliegende offene Rahmenseite durch mindestens eine längenveränderliche Spritzschutzwand abgedichtet. Diese längenveränderliche Spritzschutzwand ist einenends am Rahmen bzw. an einer dem Rahmen zugeordneten Maschinenverkleidung und anderenends am X-Schlitten befestigt und kann als Rollo, Teleskopwand, Faltenbalg etc. ausgebildet sein. Vorzugsweise ist zu beiden Seiten der Schlitteneinheit eine solche längenveränderliche Spritzschutzwand vorgesehen. Im Falle eines Werkzeugwechsels wird die längenveränderliche Spritzschutzwand vom X-Schlitten und/oder Rahmen bzw. Maschinenverkleidung manuell oder über einen Hilfsantrieb abgekuppelt, wodurch sich ein freier Zugang zu den in den Arbeitsspindeln befindlichen Werkzeugen ergibt.

Vorzugsweise ist die Werkstückhalteeinrichtung am Z-Schlitten um die horizontale Achse und auch um eine dazu rechtwinklige Achse drehbar gelagert, um eine 4- oder 5-achsige Bearbeitung zu ermöglichen. Die Werkstückhalteeinrichtung kann z.B. eine auf dem in drei Achsen verfahrbaren Z-Schlitten aufgesetzte Schwenkeinheit mit einer oder zwei Schwenkachsen zur raumschrägen Bearbeitung von Werkstücken sein.

Weitere bevorzugte Ausgestaltungen der Erfindung sind Gegenstand der Unteransprüche. Weitere Vorteile der Erfindung ergeben sich aus der Beschreibung und der Zeichnung. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine Seitenansicht der erfindungsgemäßen Werkzeugmaschine;
- Fig. 2: eine Draufsicht auf die in Fig.1 gezeigte Werkzeugmaschine;
- Fig. 3: eine perspektivische Ansicht der in Fign. 1 und 2 gezeigten Werkzeugmaschine mit einer in ihre Pick-Up-Position verfahrenen Schlitteneinheit und einer vollständig ausgefahrenen Spritzschutzwand;
- Fig. 4: die Werkzeugmaschine mit der vom Rahmen abgekuppelten und vollständig eingefahrenen Spritzschutzwand in einer Darstellung analog zu Fig. 3; und
- Fig. 5: eine Detailansicht einer Halteeinrichtung der in Fig. 1 gezeigten Werkzeugmaschine.

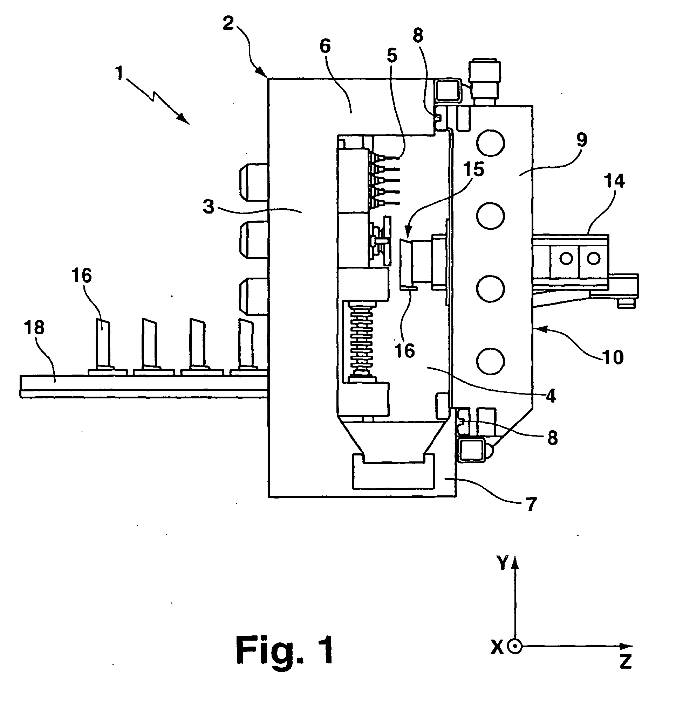

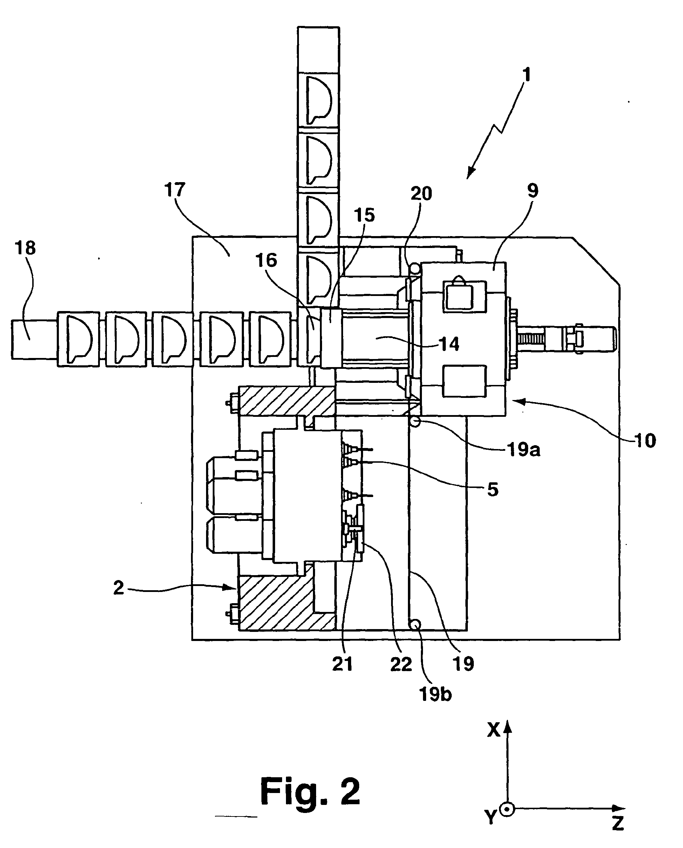

Die in **Fign. 1 und 2** gezeigte horizontale Werkzeugmaschine (horizontales Bearbeitungszentrum) **1** weist einen seitlich offenen C- oder U-förmigen Rahmen **2** auf, an dessen vertikaler Rahmenwand **3** mehrere zur offenen Rahmenseite **4** hin gerichtete Arbeitsspindeln **5** stationär befestigt sind. Die Arbeitsspindeln 5 sind werkstückspezifisch zu "Bohrbildern", d. h. zu Mehrspindelbohrköpfen, zusammengefasst.

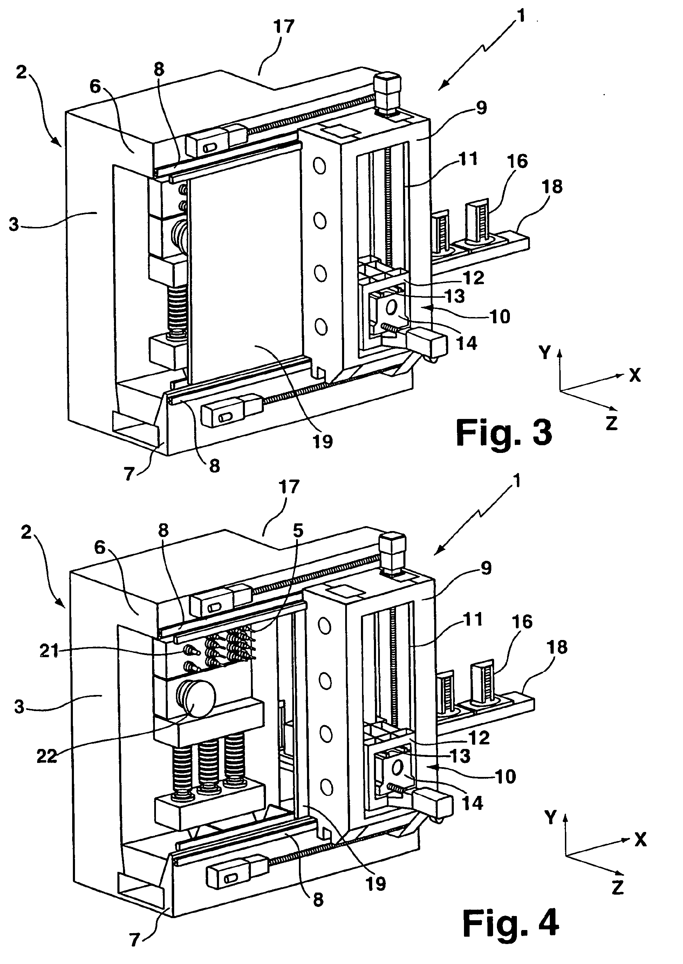

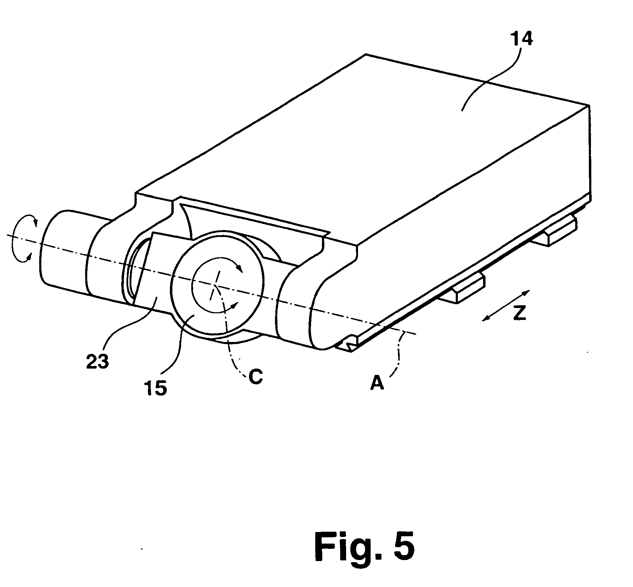

Am oberen und unteren horizontalen Rahmenschenkel **6, 7** ist jeweils eine horizontale Führung **8** für einen in X-Richtung verfahrbaren X-Schlitten **9** einer in X-, Y und Z-Richtung verfahrbaren Schlitteneinheit **10** vorgesehen. Am X-Schlitten 9 sind vertikale Führungen **11** vorgesehen, in denen ein Y-Schlitten **12** (Fig. 3) in Y-Richtung verschiebbar ist. An diesem Y-Schlitten 12 wiederum sind horizontale Führungen **13** für einen in Z-Richtung verschiebbaren Z-Schlitten **14** vorgesehen, der an seinem den Arbeitsspindeln 5 zugewandeten Ende eine Werkstückhalteeinrichtung **15** zur Aufnahme von Werkstücken **16** trägt. Wie unten mit Bezug zu Fig. 5 noch näher beschrieben, ist die Werkstückhalteeinrichtung 15 am Z-Schlitten 14 um eine in X-Richtung verlaufende Achse (A-Achse) und eine dazu rechtwinklige Achse (C-Achse) drehbar gelagert, um eine 5-achsige Bearbeitung zu ermöglichen. Die Werkstückhalteeinrichtung 15 weist einen automatischen Spannablauf auf, der ein Halten des Werkstückes 16 während der Zerspanung sowie ein Greifen des Werkstücks 16 ermöglicht. Um Querbelastungen zu vermeiden, wird die Z-Achse den Bearbeitungskräften der Arbeitsspindeln 5 genau gegenüber angeordnet.

Die horizontalen Führungen 8 erstrecken sich in X-Richtung mindestens um die Breite der Schlitteneinheit 10 über die X-Position der Arbeitsspindeln 5 hinaus. Die vertikale Rahmenwand 3 hat in diesem Bereich, in dem sich die horizontalen Führungen 8 über die X-Position der Arbeitsspindeln 5 hinaus erstrecken, ein Fenster **17,** über das die Werkstücke 16 mittels einer Transporteinrichtung (Transportband) **18** zu- und abgeführt werden. Um die zugeführten Werkstücke 16 zu greifen, wird der X-Schlitten 9 aus seiner vor den Arbeitsspindeln 5 befindlichen Bearbeitungsstellung in eine Pick-Up-Stellung vor das bzw. innerhalb des Fensters 17 verfahren und ein zu bearbeitendes Werkstück 16 mittels der Halteeinrichtung 15 gegriffen. Entsprechend wird ein bearbeitetes Werkstück 16 von der Halteeinrichtung 15 zurück an die Transporteinrichtung 18 übergeben. Zwischen Werkstückhalteeinrichtung 15 und Transporteinrichtung 18 können auch Hilfsmittel wie Greifer oder Hubeinrichtungen oder anderes eingesetzt werden.

Wie Fig. 2 zeigt, ist die den Arbeitsspindeln 5 gegenüberliegende offene Rahmenseite 4 durch zwei längenveränderliche Spritzschutzwände **19, 20** abgedichtet, die als Rollos ausgebildet sind. Diese Rollos 19, 20 sind jeweils einenends am Rahmen 2 und anderenends am X-Schlitten 9 befestigt, wobei das Rollo 19 am X-Schlitten 9 bei **19a** dauerhaft und am Rahmen 2 bei 19b lösbar befestigt ist. Statt am Rahmen 2 können die Rollos 19, 20 auch an einer dem Rahmen zugeordneten Maschinenverkleidung befestigt sein. Der Y-Schlitten 12 ist gegenüber dem X-Schlitten ebenfalls über zwei in Y-Richtung ausziehbare Rollos (nicht gezeigt) abgedichtet, die beidseitig des Y-Schlittens 12 vorgesehen und jeweils einenends am X-Schlitten 9 und anderenends am Y-Schlitten 12 befestigt sind.

An der vertikalen Rahmenwand 3 sind neben den Arbeitsspindeln 5 noch eine stationäre Montageeinheit **21** und eine Umformeinheit **22** vorgesehen. Weiterhin kann auch noch eine Mess-/Prüfeinrichtung (nicht gezeigt) zum Vermessen bzw. Prüfen des bearbeiteten Werkstückes 16 vorgesehen sein. Alternativ können diese Einheiten jeweils auch an einer anderen Stelle am Rahmen vorgesehen sein, die im Zugriffsbereich der Schlitteneinheit 10 bzw. der Werkstückhalteeinrichtung 15 liegt.

Die in den Arbeitsspindeln 5 befindlichen Werkzeuge sind einem Verschleiß unterworfen und müssen manuell oder mit Hilfsmitteln getauscht werden. Dazu wird der X-Schlitten 9 in die in **Fig. 3** gezeigte "Pick-Up"-Stellung verfahren, in der das eine Rollo 19 maximal ausgezogen und das andere Rollo 20 maximal eingezogen ist. Die Befestigung 19b des Rollos 19 am Rahmen 2 wird gelöst und das Rollo 19 manuell oder über einen Hilfsantrieb zur Seite in die in **Fig. 4** gezeigte Stellung gefahren, in der ein problemloser Zugang zu den Arbeitsspindeln 5 und den Montage- und Umformeinheiten 21, 22 möglich ist.

Die in **Fig. 5** vereinfacht als Haltefläche dargestellte Werkstückhalteeinrichtung 15 ist stirnseitig am Z-Schlitten **14** angeordnet und dort für eine **4**- und 5-achsige Bearbeitung schwenkbar um eine in X-Richtung verlaufende horizontale Achse **A** und zusätzlich schwenkbar um eine dazu rechtwinklige Achse C gelagert. Dazu ist beidseitig am Z-Schlitten 14 ein Schwenkbalken **23** schwenkbar um die Achse A gelagert, in dem wiederum die Werkstückhalteeinrichtung 15 um die Achse C drehbar gelagert ist. Die Bearbeitungsebene kann so in die Hauptbelastungsrichtung der Z-Achse geschwenkt werden.

## Patentansprüche

1. Werkzeugmaschine (1) mit einem zu einer Rahmenseite (4) hin offenen C- oder U-förmigen Rahmen (2), an dessen Rahmenwand (3) mindestens eine zur offenen Rahmenseite (4) hin gerichtete Arbeitsspindel (5) stationär befestigt ist, mit jeweils einer horizontalen Führung (8) an den beiden Rahmenschenkeln (6, 7) für einen X-Schlitten (9) einer in X-, Y- und Z-Richtung verfahrbaren Schlitteneinheit (10) und mit einer Werkstückhalteeinrichtung (15) am Z-Schlitten (14) der Schlitteneinheit (10)
**dadurch gekennzeichnet,**
**dass** sich die horizontalen Führungen (8) in X-Richtung mindestens um die Breite der Schlitteneinheit (10) über die X-Position der einen bzw. jeder Arbeitsspindel (5) hinaus erstrecken und dass die Rahmenwand (3) vertikal mit seitlich offener Rahmenseite (4) angeordnet ist und in dem Bereich, in welchem sich die horizontalen Führungen (8) über die X-Position der bzw. jeder Arbeitsspindel (5) hinaus erstrecken, mindestens ein Fenster (17) zur Zu- und Abführung von Werkstücken (16) aufweist.

2. Werkzeugmaschine nach Anspruch 1, **dadurch gekennzeichnet, dass** die bzw. jede Arbeitsspindel (5) horizontal oder raumschräg angeordnet ist.

3. Werkzeugmaschine nach Anspruch 1 oder 2, **dadurch gekennzeichnet, dass** die der bzw. jeder Arbeitsspindel (5) gegenüberliegende offene Rahmenseite (4) durch mindestens eine in X-Richtung längenveränderliche Spritzschutzwand (19, 20), insbesondere ein Rollo, abgedichtet ist, die einenends am Rahmen (2) oder an einer dem Rahmen (2) zugeordneten Maschinenverkleidung und anderenends am X-Schlitten (9) befestigt ist.

4. Werkzeugmaschine nach Anspruch 3, **dadurch gekennzeichnet, dass** zu beiden Seiten der Schlitteneinheit (10) jeweils eine in X-Richtung längenveränderliche Spritzschutzwand (19, 20), insbesondere ein Rollo, vorgesehen ist.

5. Werkzeugmaschine nach Anspruch 3 oder 4, **dadurch gekennzeichnet, dass** die längenveränderliche Spritzschutzwand (19, 20) am X-Schlitten (9) und/oder Rahmen (2) bzw. Maschinenverkleidung lösbar befestigt ist.

6. Werkzeugmaschine nach einem der vorhergehenden Ansprüche, **dadurch gekennzeichnet, dass** im Bereich des Fensters (17) eine Transporteinrichtung (18) zur Zu- und Abführung der Werkstücke (16) vorgesehen ist.

7. Werkzeugmaschine nach einem der vorhergehenden Ansprüche, **dadurch gekennzeichnet, dass** die Werkstückhalteeinrichtung (15) am Z-Schlitten (14) um eine horizontale Achse (A) drehbar gelagert ist.

8. Werkzeugmaschine nach Anspruch 7, **dadurch gekennzeichnet, dass** die Werkstückhalteeinrichtung (15) am Z-Schlitten (14) auch um eine zu ihrer horizontalen Drehachse (A) rechtwinklige Achse (C) drehbar gelagert ist.

9. Werkzeugmaschine nach einem der vorhergehenden Ansprüche, **dadurch gekennzeichnet, dass** am Rahmen (2) mindestens eine Montageeinheit (21) und/oder eine Umformeinheit (22) und/oder eine Mess-/Prüfeinrichtung vorgesehen sind.

## Claims

1. Machine tool (1) having a C-shaped or U-shaped frame (2) which is open on one frame side (4), to the frame wall (3) of which at least one working spindle (5) oriented towards the open frame side (4) is fixed in a stationary manner, in each case having a horizontal guide (8) on the two limbs (6, 7) of the frame for an X carriage (9) of a carriage unit (10) that can be moved in the X, Y and Z direction, and having a workpiece holding device (15) on the Z carriage (14) of the carriage unit (10),
**characterized in that**
the horizontal guides (8) extend in the X direction by at least the width of the carriage unit (10) beyond the X position of the one or of each working spindle (5), and **in that** the frame wall (3) is arranged vertically with the frame side (4) open at the side and, in the region in which the horizontal guides (8) extend beyond the X position of the or each working spindle (5), has at least one window (17) for the supply and removal of workpieces (16).

2. Machine tool according to Claim 1, **characterized in that** the or each working spindle (5) is arranged horizontally or spatially obliquely.

3. Machine tool according to Claim 1 or 2, **characterized in that** the open frame side (4) opposite the or each working spindle (5) is sealed off by at least one variable-length spray protection wall (19, 20), in particular a roller blind, the length of which can be varied in the X direction, which is fixed at one end to the frame (2) or to machine cladding assigned to the frame (2) and at the other end to the X carriage (9).

4. Machine tool according to Claim 3, **characterized in that**, on both sides of the carriage unit (10) there is in each case provided a spray protection wall (19, 20), in particular a roller blind, the length of which can be varied in the X direction.

5. Machine tool according to Claim 3 or 4, **characterized in that** the variable-length spray protection wall (19, 2.0) is detachably fixed to the X carriage (9) and/or frame (2) or machine cladding.

6. Machine tool according to one of the preceding claims, **characterized in that** a transport device (18) for supplying and removing the workpieces (16) is provided in the region of the window (17).

7. Machine tool according to one of the preceding claims, **characterized in that** the workpiece holding device (15) is mounted on the Z carriage (14) such that it can rotate about a horizontal axis (A axis).

8. Machine tool according to Claim 7, **characterized in that** the workpiece holding device (15) is mounted on the Z carriage (14) such that it can also rotate about an axis (C) at right angles to its horizontal axis of rotation (A).

9. Machine tool according to one of the preceding claims, **characterized in that** at least one mounting unit (21) and/or a shaping unit (22) and/or a measuring/testing device are provided on the frame (2).

## Revendications

1. Machine-outil (1) comprenant un cadre (2) en forme de U ou de C ouvert sur un côté (4) dudit cadre, sur la paroi (3) duquel est fixée à demeure au moins une broche (5) pointant vers le côté ouvert (4) du cadre, un guide horizontal (8) sur les deux branches (6, 7) du cadre pour un chariot se déplaçant sur l'axe X (9) d'une unité à chariot (10) pouvant se déplacer sur les axes X, Y et Z, et un porte-pièce (15) sur le chariot (14) se déplaçant sur l'axe Z de l'unité à chariot (10), **caractérisée en ce que** les guides horizontaux (8) s'étendent, sur l'axe X, au-delà de la position sur l'axe X de l'unique ou de chaque broche (5) au moins de la largeur de l'unité à chariot (10), et **en ce que** la paroi (3) du cadre est orientée verticalement avec le côté ouvert (4) du cadre sur le côté, et dans la zone dans laquelle les guides horizontaux (8) s'étendent au-delà de la position sur l'axe X de l'unique ou de chaque broche (5) est prévue au moins une fenêtre (17) pour amener ou évacuer des pièces à usiner (16).

2. Machine-outil selon la revendication 1, **caractérisée en ce que** la broche ou chaque broche (5) est disposée horizontalement ou à l'oblique.

3. Machine-outil selon la revendication 1 ou 2, **caractérisée en ce que** le côté ouvert (4) du cadre situé en face de la broche ou de chaque broche (5) est fermé de façon étanche par au moins une paroi anti-projection (19, 20) dont la longueur peut varier dans la direction de l'axe X, notamment un store, qui est fixée par une extrémité au cadre (2) ou à un habillage de la machine associé au cadre (2) et par l'autre extrémité au chariot de l'axe X (9).

4. Machine-outil selon la revendication 3, **caractérisée en ce que** de part et d'autre de l'unité à chariot (10) est chaque fois prévue une paroi anti-projection (19, 20) dont la longueur peut varier dans la direction de l'axe X, notamment un store.

5. Machine-outil selon la revendication 3 ou 4, **caractérisée en ce que** la paroi anti-projection (19, 20) dont la longueur peut varier est fixée de manière amovible au chariot de l'axe X (9) et/ou au cadre (2) ou à l'habillage de la machine-outil.

6. Machine-outil selon l'une des revendications précédentes, **caractérisée en ce que** dans la zone de la fenêtre (17) est prévu un dispositif de transport (18) pour amener et évacuer les pièces à usiner (16).

7. Machine-outil selon l'une des revendications précédentes, **caractérisée en ce que** le porte-pièce (15) est monté sur le chariot de l'axe Z (14) de manière à pouvoir tourner autour d'un axe horizontal (A).

8. Machine-outil selon la revendication 7, **caractérisée en ce que** le porte-pièce (15) est également monté sur le chariot de l'axe Z (14) de manière à pouvoir tourner autour d'un axe (C) perpendiculaire à son axe de rotation horizontal (A).

9. Machine-outil selon l'une des revendications précédentes, **caractérisée en ce qu'**au moins une unité de montage (21) et/ou une unité de transformation (22) et/ou une unité de mesure/contrôle sont prévues sur le cadre (2).
